(19) Europäisches Patentamt
European Patent Office
Office européen des brevets

(11) **EP 1 860 528 A2**

(12) **EUROPEAN PATENT APPLICATION**

(43) Date of publication:
**28.11.2007 Bulletin 2007/48**

(51) Int Cl.:
***G06F 3/033*** *(2006.01)*

(21) Application number: **07075290.2**

(22) Date of filing: **17.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **23.05.2006 KR 20060046218**

(71) Applicant: **Samsung Electronics Co., Ltd.**
**Suwon-si**
**Gyeonggi-do (KR)**

(72) Inventors:
• **Bang, Won-chul c/o Samsung**
  **Yongin-si, Gyeonggi-do (KR)**

• **Kim, Dong-yoon c/o Samsung**
  **Yongin-si, Gyeonggi-do (KR)**
• **Kim, Yeun-bae c/o Samsung**
  **Yongin-si, Gyeonggi-do (KR)**
• **Sohn, Jun-il c/o Samsung**
  **Yongin-si, Gyeonggi-do (KR)**
• **Choi, Eun-seok c/o Samsung**
  **Yongin-si, Gyeonggi-do (KR)**

(74) Representative: **Hylarides, Paul Jacques et al**
**Arnold & Siedsma**
**Sweelinckplein 1**
**2517 GK The Hague (NL)**

(54) **Pointing device, pointer movement method and medium, and display device for displaying the pointer**

(57)     A pointing device and a pointer movement method and medium are disclosed. The pointing device includes an angular velocity detection module detecting a first angular velocity, a second angular velocity, and a third angular velocity of the pointing device turning about three different axes according to movement of a housing, an acceleration detection module detecting an acceleration of the pointing device according to the movement, an attitude computation module computing attitude information of the housing by using the detected acceleration information, a signal conversion module converting the first angular velocity, the second angular velocity, and the third angular velocity into angular velocities in a display coordinate system, respectively, by using the attitude information, and a pointer-coordinate computation module computing coordinates of a pointer to be displayed on a display device by using the converted angular velocity information.

**FIG. 1**

EP 1 860 528 A2

**Description**

CROSS-REFERENCE TO RELATED APPLICATIONS

This application claims the benefit of Korean Patent Application No. 10-2006-0046218 filed on May 23, 2006 in the Korean Intellectual Property Office, the disclosure of which is incorporated herein by reference in its entirety.

BACKGROUND OF THE INVENTION

1. Field of the Invention

The present invention relates to a pointing device, a pointer movement method and medium, and a display device for displaying the pointer, and more particularly, to a pointing device that remotely moves a pointer appearing on a display screen, and a pointer movement method and medium that moves the pointer appearing on the display screen irrespective of a hand-held position of the pointing device.

2. Description of the Related Art

Generally, in order to control a display device such as a television receiver, a user may directly press a control button, such as a power on/off button, a volume up/down button, and a channel up/down button, attached to the display device, or use a remote controller having the same function as the control button.
Recently, with the development of communication and video technologies, a display device such as a television receiver has a function of making the user select diverse content such as a bidirectional television receiver in addition to a function of simply providing video and audio to a user. A conventional remote controller has a four-directional key, and using this four-direction key, a highlighted mark appearing on a display screen can be moved to content desired by a user. However, it causes the user inconvenience to move the highlighted mark onto an object on the screen using the four-directional key. In particular, if it is required for the object selection to press the four-directional key several times, its usability greatly deteriorates.
In order to solve this problem, a method of moving a pointer appearing on a display screen has been proposed. U.S. Patent No. 5,440,326 discloses a gyroscopic pointing device, in which when a user holds a gyroscopic pointing device in a predetermined manner and moves the gyroscopic pointing device left, right, upward, and downward, a pointer displayed on a screen of a display device located at a remote place also moves left, right, upward, and downward.
However, the prior art gyroscopic pointing device has limitations in holding the gyroscopic pointing device. That is, if the gyroscopic pointing device is moved left and right in a state that it is hand-held with its direction changed, the pointer displayed on the screen of the display device is not moved left and right. In order to solve this problem, a user should hold and move the gyroscopic pointing device in a predetermined manner, and this causes the user inconvenience.
Consequently, it is required to provide a method of consistently moving a pointer on a screen of a display device, irrespective of the user's attitude of holding a pointing device.

SUMMARY OF THE INVENTION

Accordingly, the present invention has been made to solve the above-mentioned problems occurring in the prior art, and the present invention provides a method and medium of consistently moving a pointer appearing on a screen of a display device at a remote place, irrespective of a hand-held position of a pointing device, and the pointing device moving the pointer according to the method and medium.
Additional advantages, aspects, and features of the invention will be set forth in part in the description which follows and in part will become apparent to those having ordinary skill in the art upon examination of the following description or may be learned from practice of the invention.
In an aspect of the present invention, there is provided a pointing device including an angular velocity detection module detecting a first angular velocity, a second angular velocity, and a third angular velocity of the pointing device turning about three different axes according to movement of a housing, an acceleration detection module detecting an acceleration of the pointing device according to the movement, an attitude computation module computing attitude information of the housing by using the detected acceleration information, a signal conversion module converting the first angular velocity, the second angular velocity, and the third angular velocity into angular velocities in a display coordinate system, respectively, by using the attitude information, and a pointer-coordinate computation module computing coordinates of a pointer to be displayed on a display device by using the converted angular velocity information.
In another aspect of the present invention, there is provided a pointing device including an angular velocity detection module detecting a first angular velocity, a second angular velocity, and a third angular velocity of the pointing device turning about three different axes according to movement of a housing, an acceleration detection module detecting an acceleration of the pointing device according to the movement, an attitude computation module computing attitude information of the housing by using the detected acceleration information, and a signal conversion module converting the first angular velocity, the second angular velocity, and the third angular velocity into angular velocities in a display coordinate system, respectively, by using the attitude information.

In still another aspect of the present invention, there is provided a pointer movement method including (a) detecting a first angular velocity, a second angular velocity, a third angular velocity, and an acceleration of the pointing device turning about three different axes according to movement of a housing, (b) computing attitude information of the housing by using the detected acceleration information, (c) converting the first angular velocity, the second angular velocity, and the third angular velocity into angular velocities in a display coordinate system, respectively, by using the attitude information, and (d) computing coordinates of a pointer to be displayed on a display device by using the converted angular velocity information, and (e) changing a position of the pointer by using the computed coordinates of the pointer.

In still another aspect of the present invention, there is provided a pointer movement method including (a) detecting a first angular velocity, a second angular velocity, a third angular velocity, and an acceleration of the pointing device turning about three different axes according to movement of a housing, (b) computing attitude information of the housing by using the detected acceleration information, (c) converting the first angular velocity, the second angular velocity, and the third angular velocity into angular velocities in a display coordinate system, respectively, by using the attitude information, and transmitting the converted angular velocity information, (d) computing coordinates of a pointer to be displayed on a display device by using the transmitted angular velocity information, and (e) changing a position of the pointer by using the computed coordinates of the pointer.

In still another aspect of the present invention, there is provided a pointer movement method including (a) receiving a wireless signal from a pointing device, (b) extracting from the wireless signal each angular velocity information corresponding to a first angular velocity, a second angular velocity, and a third angular velocity of the pointing device turning about three different axes according to movement of the pointing device, (c) computing coordinates of a pointer to be displayed by using the extracted angular velocity information, and (d) moving a position of the pointer according to the computed coordinates.

In still another aspect of the present invention, there is provided a display device including a wireless signal reception module receiving a wireless signal from a pointing device, and extracting from the wireless signal each angular velocity information corresponding to a first angular velocity, a second angular velocity, and a third angular velocity of the pointing device turning about three different axes according to movement of the pointing device, a pointer-coordinate computation module computing coordinates of a pointer to be displayed by using the extracted angular velocity information, and a pointer control module moving a position of the pointer according to the computed coordinates.

According to another aspect of the present invention, there is provided a pointing device having a housing, the pointing device including an angular velocity detection module to detect a first angular velocity, a second angular velocity, and a third angular velocity of the pointing device in a pointing device coordinate system, the pointing device turning about three different axes in the pointing device coordinate system according to movement of the pointing device; an acceleration detection module to detect acceleration of the pointing device according to the movement of the pointing device in the pointing device coordinate system to obtain acceleration information; an attitude computation module to compute attitude information of the pointing device by using the acceleration information; a signal conversion module to convert the first angular velocity, the second angular velocity, and the third angular velocity into angular velocities in a display coordinate system, respectively, by using the attitude information; and a pointer-coordinate computation module to compute coordinates of a pointer to be displayed on a display device by using the converted angular velocities.

According to another aspect of the present invention, there is provided a pointer movement method including (a) detecting a first angular velocity, a second angular velocity, and a third angular velocity of a pointing device having a housing in a pointing device coordinate system, the pointing device having the housing turning about three different axes according to movement of the pointing device having the housing; (b) detecting acceleration of the pointing device according to the movement of the pointing device having the housing in the pointing device coordinate system to obtain acceleration information; (c) computing attitude information of the pointing device having the housing by using the acceleration information; (d) converting the first angular velocity, the second angular velocity, and the third angular velocity into angular velocities in a display coordinate system, respectively, by using the attitude information; (e) computing coordinates of a pointer to be displayed on a display device by using the converted angular velocities; and (f) changing a position of the pointer by using the computed coordinates of the pointer.

According to another aspect of the present invention, there is provided a pointing device having a housing including an angular velocity detection module to detect a first angular velocity, a second angular velocity, and a third angular velocity of the pointing device in a pointing device coordinate system, the pointing device turning about three different axes according to movement of the pointing device; an acceleration detection module to detect an acceleration of the pointing device according to the movement of the pointing device in the pointing device coordinate system to obtain acceleration information; an attitude computation module to compute attitude information of the pointing device by using the acceleration information; and a signal conversion module to convert the first angular velocity, the second angular velocity, and the third angular velocity into angular velocities in a display coordinate system, respectively, by using the attitude information.

According to another aspect of the present invention, there is provided a display device including a wireless signal reception module to receive a wireless signal from a pointing device, and to extract from the wireless signal each angular velocity corresponding to a first angular velocity, a second angular velocity, and a third angular velocity of the pointing device turning about three different axes according to movement of the pointing device; a pointer-coordinate computation module to compute coordinates of a pointer to be displayed on the display device by using the extracted angular velocity information; and a pointer control module to move a position of the pointer displayed on the display device according to the computed coordinates.

According to another aspect of the present invention, there is provided a pointer movement method including (a) detecting a first angular velocity, a second angular velocity, and a third angular velocity of the pointing device having a housing in a pointing device coordinate system, the pointing device having the housing turning about three different axes according to movement of the pointing device having the housing; (b) detecting acceleration of the pointing device according to the movement of the pointing device having the housing in the pointing device coordinate system to obtain acceleration information; (c) computing attitude information of the pointing device having the housing by using the detected acceleration information; (d) converting the first angular velocity, the second angular velocity, and the third angular velocity into angular velocities in a display coordinate system, respectively, by using the attitude information, and transmitting the converted angular velocities to a display device; (e) receiving the transmitted converted angular velocities in the display device; (f) computing coordinates of a pointer to be displayed on the display device by using the converted angular velocities; and (g) changing a position of the pointer displayed on the display device by using the computed coordinates of the pointer.

According to another aspect of the present invention, there is provided a pointer movement method including (a) receiving a wireless signal from a pointing device; (b) extracting from the wireless signal a first angular velocity, a second angular velocity, and a third angular velocity of the pointing device turning about three different axes according to movement of the pointing device; (c) computing coordinates of a pointer to be displayed on a display device by using the extracted angular velocity information; and (d) moving a position of the pointer displayed on the display device according to the computed coordinates.

According to another aspect of the present invention, there is provided a pointer movement method including converting a first angular velocity, a second angular velocity, and a third angular velocity of a pointing device moving in a pointing device coordinate system to angular velocities in a display coordinate system, respectively, by using a first attitude, a second attitude, and a third attitude of the pointing device; computing coordinates of a pointer to be displayed on a display device by using the converted angular velocities; and changing a positing of the pointer to be displayed on the display device by using the computed coordinates of the pointer.

According to another aspect of the present invention, there is provided a pointer movement method including converting a first angular velocity, a second angular velocity, and a third angular velocity of a pointing device moving in a pointing device coordinate system to angular velocities in a display coordinate system, respectively, by using a first attitude, a second attitude, and a third attitude of the pointing device; transmitting converted angular velocities from the pointing device to a display device; computing coordinates of a pointer to be displayed on a display device by using the converted angular velocities using the display device; and changing a positing of the pointer displayed on the display device by using the computed coordinates of the pointer.

According to another aspect of the present invention, there is provided at least one computer readable medium storing computer readable instructions to implement methods of the present invention.

BRIEF DESCRIPTION OF THE DRAWINGS

Aspects, features, and advantages of the invention will become apparent and more readily appreciated from the following description of exemplary embodiments, taken in conjunction with the accompanying drawings of which:

FIG. 1 is a view schematically illustrating a system according to an exemplary embodiment of the present invention;
FIG. 2 is a block diagram illustrating the construction of a pointing device according to an exemplary embodiment of the present invention;
FIG. 3 is a block diagram illustrating the construction of a display device according to an exemplary embodiment of the present invention;
FIG. 4 is a flowchart illustrating a pointer movement method according to an embodiment exemplary of the present invention;
FIG. 5 is a block diagram illustrating the construction of a pointing device according to an exemplary embodiment of the present invention;

FIG. 6 is a block diagram illustrating the construction of a display device according to another exemplary embodiment of the present invention; and

FIG. 7 is a flowchart illustrating a pointer movement method according to another exemplary embodiment of the present invention.

## DETAILED DESCRIPTION OF THE PREFERRED EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

Hereinafter, exemplary embodiments of the present invention will be described with reference to the accompanying drawings illustrating block diagrams and flowcharts for explaining a pointing device, a pointer movement method, and a display device for displaying the pointer according to an exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, implement the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instructions that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In an embodiment of the present invention, the term "display device" denotes a device displaying a pointer corresponding to movement of a pointing device.

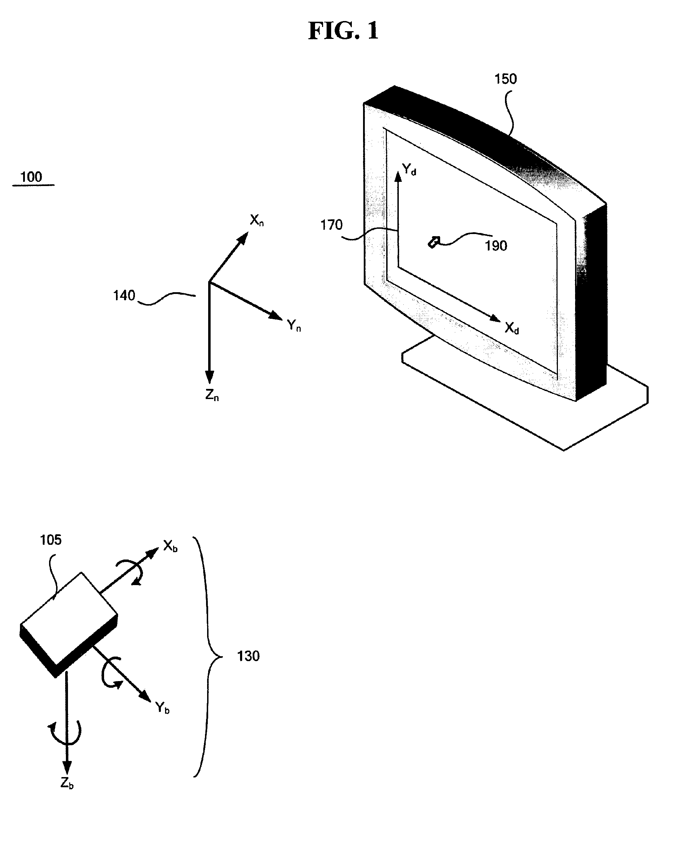

FIG. 1 is a view schematically illustrating a system according to an exemplary embodiment of the present invention.

Referring to FIG. 1, a system 100 according to an exemplary embodiment of the present invention includes a display device 105 displaying a pointer 190, and a pointing device 105 which is an input device controlling movement of the pointer 190 at a remote place.

Also, a device coordinate system 130 (pointing device coordinate system 130) to represent movement and attitude of the pointing device 105 is shown in FIG. 1. It will be understood from FIG. 1 that the device coordinate system 130 is composed of three axes $X_b$, $Y_b$, and $Z_b$. This is an illustrative purpose, and any coordinate system to represent the movement and attitude of the pointing device 150 can be applied to the present invention. Herein, a suffix "b" indicates a coordinate system of the pointing device.

Meanwhile, a coordinate system (referred to as "display coordinate system 140") may be established on the basis of the display device 150, which corresponds to the device coordinate system 130. Herein, a suffix "n" indicates a coordinate system of the display device.

A pointer coordinate system 170 to represent pointer coordinates of the display device is shown in FIG. 1. It will be understood from FIG. 1 that the pointer coordinate system 170 is composed of two axes $X_d$ and $Y_d$. This is an illustrative purpose, and any coordinate system to represent the pointer coordinates in the display device can be applied to the present invention.

When a user holds the pointing device 105 and turns it about a certain axis of the device coordinate system 130, the pointing device 105 detects its angular velocity and acceleration based on the movement of the pointing device. Then, the pointing device 105 computes position coordinates of the moved pointer 190 based on the detected angular velocity and acceleration, and transmits the results to the display device 150.

The display device 150 moves the position of the pointer 190 by using the position coordinates of the pointer 190 received from the pointing device 105.

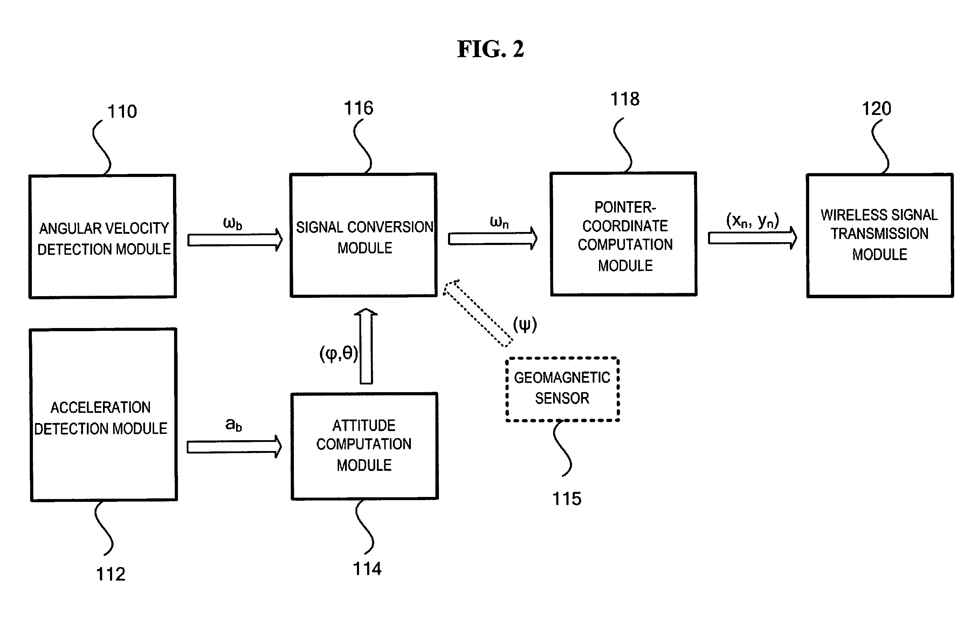

FIG. 2 is a block diagram illustrating the construction of the pointing device according to an exemplary embodiment of the present invention.

Referring to FIG. 2, the pointing device 105 includes an angular velocity detection module 110, an acceleration detection module 112, an attitude computation module 114, a signal conversion module 116, a pointer-coordinate computation module 118, and a wireless signal transmission module 120.

The angular velocity detection module 110 detects rotational information (e.g., rotational angular velocity) of the pointing device with respect to the respective X-axis, Y-axis, and Z-axis, each of which is an axis of rotation, in the device coordinate system shown in FIG. 1, when the pointing device corresponding to a housing moves. The acceleration detection module 112 detects the acceleration of the pointing device in each direction of X-axis, Y-axis, and Z-axis in the device coordinate system, when the pointing device moves.

The attitude computation module 114 computes the attitude of the pointing device by using acceleration information (data) detected by the acceleration detection module 112. A method of representing the attitude of the pointing device may employ a roll angle, a pitch angle, and a yaw angle, which are respectively represented by $\Phi$, $\theta$, and $\psi$.

The signal conversion module 116 converts the angular velocity information (data) in the device coordinate system 130 detected by the angular velocity detection module 110 into the angular velocity information (data) in the display coordinate system 140 by using the attitude information (data) computed by the attitude computation module 114.

The pointer-coordinate computation module 118 computes the pointer coordinates of the display device in the display device by using the angular velocity information (data) converted by the signal conversion module 116, and the wireless signal transmission module 120 transmits the computed pointer coordinates to the display device.

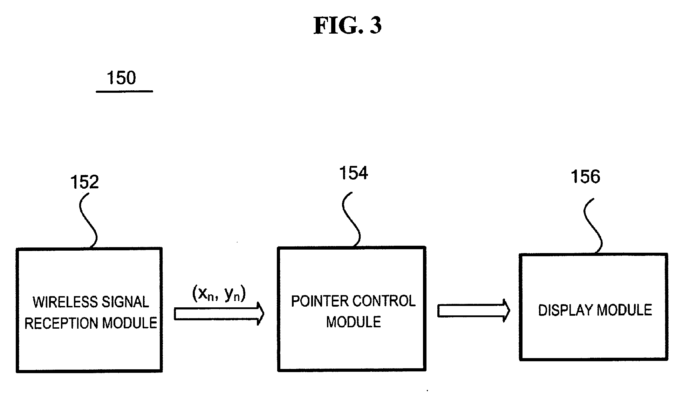

FIG. 3 is a block diagram illustrating the construction of the display device according to an exemplary embodiment of the present invention. The display device 150 includes a wireless signal reception module 152, a pointer control module 154, and a display module 156.

The wireless signal reception module 152 receives a wireless signal from the wireless signal transmission module 120 to extract the pointer coordinates. The display module 156 displays the pointer, and the pointer control module 154 controls the movement of the pointer to be displayed by the display module 156 by using the extracted pointer coordinates.

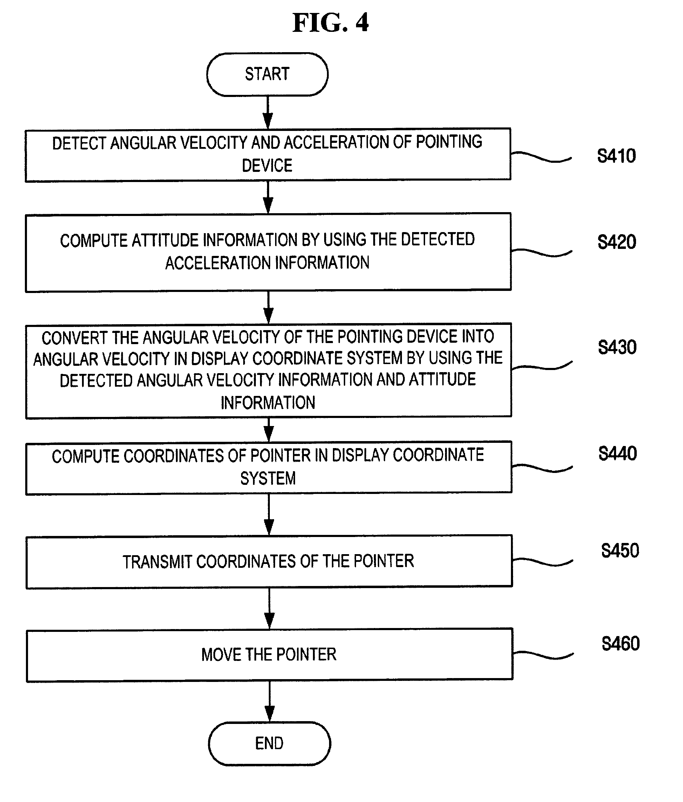

The pointer movement method will now be described in detail with reference to the construction shown in FIGs. 2 and 3 and the flowchart shown in FIG. 4.

First, the angular velocity detection module 110 and the acceleration detection module 112 detect the angular velocity and acceleration of the moving pointing device S410.

To this end, the angular velocity detection module 110 detects the angular velocity of the pointing device turning about $X_b$-axis, $Y_b$-axis, and $Z_b$-axis of the device coordinate systems shown in FIG. 1. The angular velocity detection module 110 may include a sensor detecting the rotational angular velocity with respect to each axis, and a gyroscope sensor may be used as the sensor. In this instance, the angular velocity detected by the angular velocity detection module 110 may be expressed in Wb which will be expressed by Equation 1 below.

$$[\text{Equation 1}]$$

$$w_b = \begin{bmatrix} w_{bx} w_{by} w_{bz} \end{bmatrix}^T$$

In Equation 1, $w_{bx}$, $w_{by}$, and $w_{bz}$ denote angular velocities of a pointing device turning about an X-axis, a Y-axis, and a Z-axis, respectively.

While the angular velocity of the moving pointing device with respect to each axis is detected by the angular detection module 110, the acceleration detection module 112 detects the acceleration of the pointing device turning about the X-axis, Y-axis, and Z-axis in the device coordinate system, respectively. In this instance, the acceleration detected by the acceleration detection module 112 may be expressed in $a_b$ which will be expressed by Equation 2 below.

$$[\text{Equation 2}]$$

$$a_b = \begin{bmatrix} a_{bx} a_{by} a_{bz} \end{bmatrix}^T$$

In Equation 2, $a_{bx}$, $a_{by}$, and $a_{bz}$ denote accelerations with respect to the directions of the X-axis, Y-axis, and Z-axis, respectively.

If the accelerations are detected by the acceleration detection module 112, the attitude computation module 114 computes the attitude information representing the attitude of the pointing device by use of the detected acceleration information. In this instance, the attitude information may be expressed in a roll angle, a pitch angle, and a yaw angle which are respectively represented by $\phi$, $\theta$, and $\psi$.

The attitude computation module 114 can obtain the attitude information of the pointing device from the detected information by use of Equations 3 and 4 below.

[Equation 3]

$$\phi = \mathrm{atan2}\,(-a_{by}, -a_{bz})$$

[Equation 4]

$$\theta = \mathrm{atan2}\,(a_{bx}, \sqrt{a_{by}^2 + a_{bz}^2})$$

In Equations 3 and 4, a function "atan2(A, B)" denotes a function deriving an arc tangent value from A and B coordinates, and a value $\psi$ corresponding to the yaw angle will be described hereinafter.

If the attitude information of the pointing device is obtained according to the above manner, the signal conversion module 116 converts the angular velocity $w_b$ in the device coordinate system 130 into the angular velocity $w_n$ in the display coordinate system 140 by use of the angular velocity information detected by the angular velocity detection module 110 and the attitude information S430, as Equation 5 below.

[Equation 5]

$$w_n = C_b^n w_b$$

where $W_n$ denotes an angular velocity in the display coordinate system, and can be expressed as $w_n = [w_{nx} w_{ny} w_{nz}]^T$, and $W_b$ denotes an angular velocity of the pointing device, as described in Equation 1. Also, $C_b^n$ can be expressed by Equation 6.

[Equation 6]

$$C_b^n = \begin{bmatrix} \cos\theta\cos\psi & -\cos\phi\sin\psi + \sin\phi\sin\theta\cos\psi & \sin\phi\sin\psi + \cos\phi\sin\theta\cos\psi \\ \cos\theta\sin\psi & \cos\phi\cos\psi + \sin\phi\sin\theta\sin\psi & -\sin\phi\cos\psi + \cos\phi\sin\theta\sin\psi \\ -\sin\theta & \sin\phi\cos\theta & \cos\phi\cos\theta \end{bmatrix}$$

As can be understood from Equations 5 and 6, the device coordinate system 130 can be converted into the display coordinate system 140, irrespective of the position of the pointing device held by the user.

In order to more easily compute Equation 6, it can let the value $\psi$ corresponding to the yaw angle among the attitude information be zero. In this instance, $C_b^n$ can be adjusted as Equation 7.

[Equation 7]

$$C_b^n = \begin{bmatrix} \cos\theta & \sin\phi\sin\theta & \cos\phi\sin\theta \\ 0 & \cos\phi & -\sin\phi \\ -\sin\theta & \sin\phi\cos\theta & \cos\phi\cos\theta \end{bmatrix}$$

Also, in order to precisely compute the angular velocity information in the display coordinate system, the pointing device 105 may include a geomagnetic sensor 115 searching flow of a magnetic field generated in the earth to detect its orientation as a compass. In this instance, the geomagnetic sensor 115 can detect variation of the orientation to output the value ψ corresponding to the yaw angle to the signal conversion module 116. The signal conversion module 116 can obtain the angular velocity information in the display coordinate system by applying the value ψ associated with the variation of orientation to Equation 6.

If the angular velocity in the display coordinate system is obtained through the above manner, the pointer-coordinate computation module 118 computes the pointer coordinates in the display device 150 by use of the angular velocity information converted by the signal conversion module 116 S440.

The pointer coordinates denotes the pointer coordinates in the pointer coordinates 170, and the pointer coordinates $(x_n, y_n)$ can be derived from Equation 8.

[Equation 8]

$$x_n = r_x \int w_{nz}\,dt$$

$$y_n = r_y \int w_{ny}\,dt$$

In this instance, $r_x$ and $r_y$ are scale coefficients which correspond to a value to adjust a movement degree of the pointer moving on the display screen in accordance with the movement of the pointing device 105. A scale coefficient adjusting unit (scale coefficient adjuster) may be built in the pointing device 105 to enable the user to directly adjust the scale coefficient, or the scale coefficient may be predetermined as a specified value.

For example, in the case in which the user lets values of $r_x$ and $r_y$ down by use of the scale coefficient adjusting unit built in the pointing device 105, the pointer is moved at more shorter distance on the display screen relative to the previous case, when the user moves the pointing device.

In this case, the pointer coordinates $(x_n, y_n)$ may be coordinates for the origin of the display coordinate system, or be relative coordinates for the position of the pointer currently displayed, i.e., information about the moving distance of the pointer currently displaying.

The wireless signal transmission module 120 transmits the information about the pointer coordinates computed by the pointer-coordinate computation module 118 to the display device 150 S450.

The wireless signal reception module 152 of the display device 150 extracts the pointer coordinates $(x_n, y_n)$ from the wireless signal received from the pointing device 105, and the pointer control module 154 moves the position of the pointer currently displayed on the display module 156 by use of the extracted pointer coordinates S460.

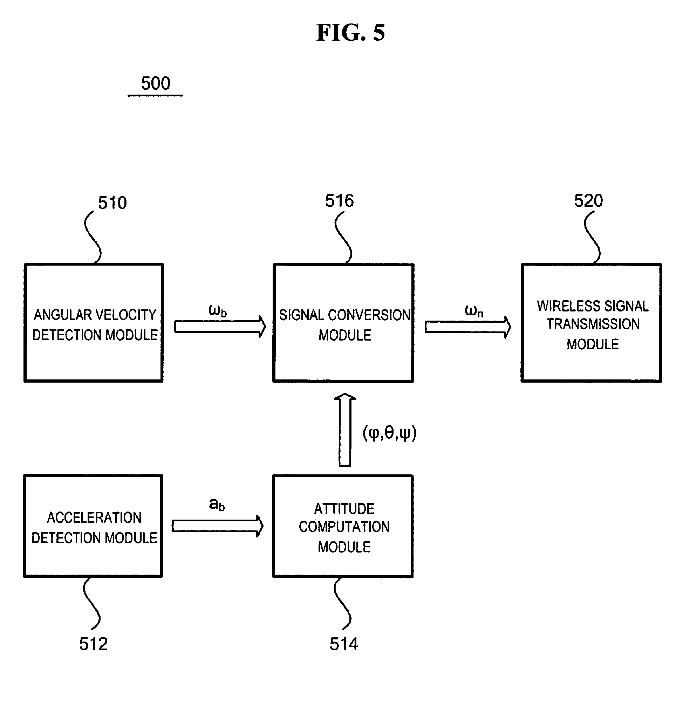

FIG. 5 is a block diagram illustrating the construction of a pointing device 500 according to an exemplary embodiment of the present invention, and the pointing device 500 corresponds to the pointing device 105 shown in FIG. 1.

Referring to FIG. 5, the pointing device 500 includes an angular velocity detection module 510, an acceleration detection module 512, an attitude computation module 514, a signal conversion module 516, and a wireless signal transmission module 520.

The angular velocity detection module 510 detects the rotational angular velocity of the pointing device with respect to the respective X-axis, Y-axis, and Z-axis, each of which is an axis of rotation, in the device coordinate system shown in FIG. 1, when the pointing device moves. The acceleration detection module 512 detects the acceleration of the pointing device in each direction of X-axis, Y-axis, and Z-axis in the device coordinate system, when the pointing device moves.

The attitude computation module 514 computes the attitude of the pointing device by using acceleration information detected by the acceleration detection module 512. A method of representing the attitude of the pointing device may employ a roll angle, a pitch angle, and a yaw angle, which are respectively represented by $\Phi$, $\theta$, and $\psi$.

The signal conversion module 516 converts the angular velocity information in the device coordinate system 130 detected by the angular velocity detection module 510 into the angular velocity information in the display coordinate system by using the attitude information computed by the attitude computation module 514.

The wireless signal transmission module 520 transmits the converted angular velocity to the display device.

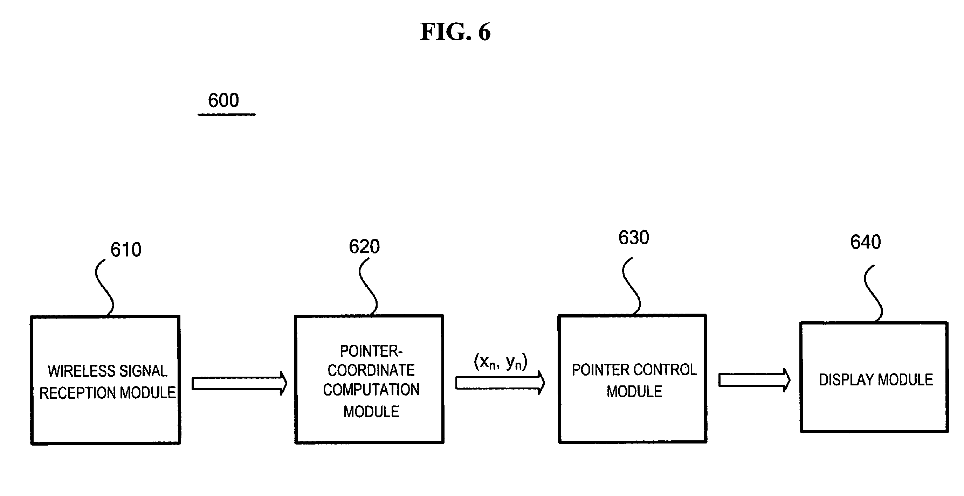

FIG. 6 is a block diagram illustrating the construction of a display device 600 according to another exemplary embodiment of the present invention, and the display device 600 corresponds to the display device 150 shown in FIG. 1.

The display device 600 includes a wireless signal reception module 610, a pointer-coordinate computation module 620, a pointer control module 610, and a display module 640.

The wireless signal reception module 610 receives a wireless signal from the wireless signal transmission module 520 of the pointing device 500 to extract the angular velocity information from the display coordinate system. The pointer-coordinate computation module 620 computes the pointer coordinates in the display device 600 by use of the extracted angular velocity.

The display module 640 displays the pointer, and the pointer control module 630 controls the movement of the pointer to be displayed by the display module 156 by using the computed pointer coordinates.

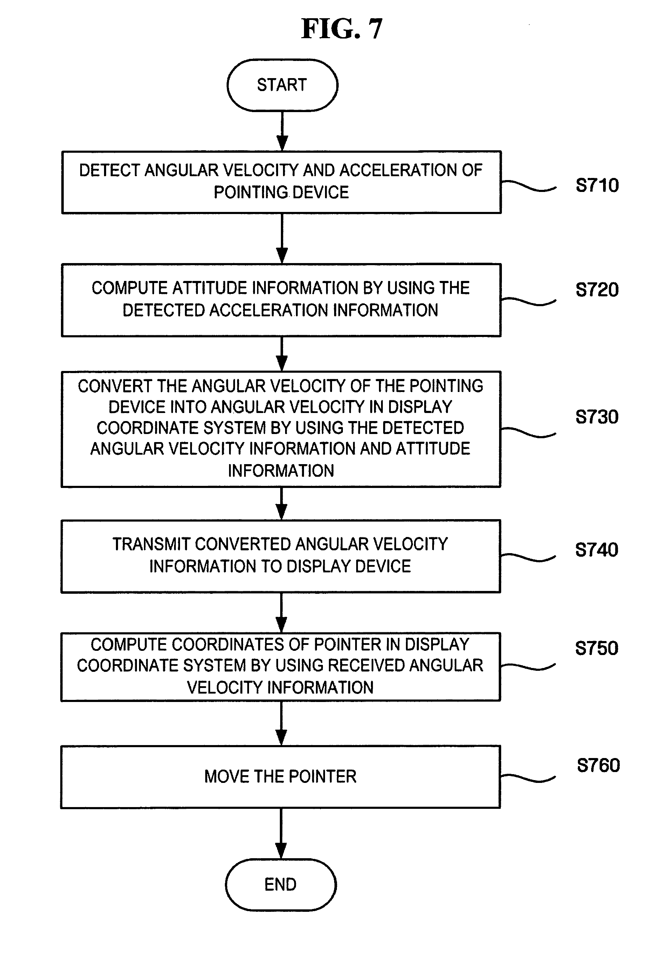

The pointer movement method according to another exemplary embodiment of the present invention will now be described in detail with reference to the construction shown in FIGs. 5 and 6 and the flowchart shown in FIG. 7.

The angular velocity detection module 510, the acceleration detection module 512, the attitude computation module 514, and the signal conversion module 516, which are shown in FIG. 5, correspond to the angular velocity detection module 110, the acceleration detection module 112, the attitude computation module 114, and the signal conversion module 116, which are shown in FIG. 2. Also, since their functions are identical to each other, the detailed description will be omitted. Furthermore, the processes S710 through S730 in FIG. 7 are identical to the processes S410 through S430 in FIG. 4, it does not described herein.

Referring to FIG. 5, the wireless signal transmission module 520 transmits the information about the display coordinate system provided by the signal conversion module 516 to the display device 600 S740.

The wireless signal reception module 610 of the display device 600 receives the wireless signal from the pointing device 500, and extracts the angular velocity information $w_n$ from display coordinate system to output it to the pointer-coordinate computation module 620.

The pointer-coordinate computation module 620 computes the pointer coordinates in the pointer coordinate system by the same method as Equation 8 based on the angular velocity information S750. Then, the pointer control module 630 moves the position of the pointer currently displayed on the display module 640 by use of the extracted pointer coordinates S760.

As described above, according to the pointing device, the pointer movement method, and the display device displaying the pointer of the present invention, the pointing device can consistently move the pointer on the display screen positioned at a remote place, irrespective of the hand-held position of the pointing device.

In addition to the above-described exemplary embodiments, exemplary embodiments of the present invention can also be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter. In addition, code/instructions may include functional programs and code segments.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, DVDs, etc.), magneto-optical media (e.g., floptical disks), and hardware storage devices (e.g., read only memory media, random access memory media, flash memories, etc.). The computer readable code/instructions may be executed by one or more processors. The computer readable code/instructions may also be executed and/or embodied in at least one application specific integrated circuit (ASIC) or Field Programmable Gate Array (FPGA).

In addition, one or more software modules or one or more hardware modules may be configured in order to perform the operations of the above-described exemplary embodiments.

The term "module", as used herein, denotes, but is not limited to, a software component, a hardware component, or a combination of a software component and a hardware component, which performs certain tasks. A module may advantageously be configured to reside on the addressable storage medium/media and configured to execute on one or more processors. Thus, a module may include, by way of example, components, such as software components, application specific software component, object-oriented software components, class components and task components, processes, functions, operations, execution threads, attributes, procedures, subroutines, segments of program code, drivers, firmware, microcode, circuitry, data, databases, data structures, tables, arrays, and variables. The functionality provided for in the components or modules may be combined into fewer components or modules or may be further separated into additional components or modules. Further, the components or modules can operate at least one processor (e.g. central processing unit (CPU)) provided in a device. In addition, examples of a hardware components include an application specific integrated circuit (ASIC) and Field Programmable Gate Array (FPGA). As indicated above, a module can also denote a combination of a software component(s) and a hardware component(s).

The computer readable code/instructions and computer readable medium/media may be those specially designed and constructed for the purposes of the present invention, or they may be of the kind well-known and available to those skilled in the art of computer hardware and/or computer software.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

**Claims**

1. A pointing device having a housing, the pointing device comprising:

   an angular velocity detection module to detect a first angular velocity, a second angular velocity, and a third angular velocity of the pointing device in a pointing device coordinate system, the pointing device turning about three different axes in the pointing device coordinate system according to movement of the pointing device;
   an acceleration detection module to detect acceleration of the pointing device according to the movement of the pointing device in the pointing device coordinate system to obtain acceleration information;
   an attitude computation module to compute attitude information of the pointing device by using the acceleration information;
   a signal conversion module to convert the first angular velocity, the second angular velocity, and the third angular velocity into angular velocities in a display coordinate system, respectively, by using the attitude information; and
   a pointer-coordinate computation module to compute coordinates of a pointer to be displayed on a display device by using the converted angular velocities.

2. The pointing device of claim 1, wherein the acceleration information comprises acceleration information on three different axes, and the attitude information comprises a roll angle and a pitch angle.

3. The pointing device of claim 2, wherein the attitude information further comprises a yaw angle.

4. The pointing device of claim 1, wherein the pointing device further comprises a geomagnetic sensor, which provides a yaw angle.

5. The pointing device of claim 1, wherein the coordinates of the pointer are adjusted by a scale coefficient which adjusts a movement degree of the pointer according to the movement of the pointing device.

6. A pointer movement method comprising:

   (a) detecting a first angular velocity, a second angular velocity, and a third angular velocity of a pointing device having a housing in a pointing device coordinate system, the pointing device having the housing turning about three different axes according to movement of the pointing device having the housing;
   (b) detecting acceleration of the pointing device according to the movement of the pointing device having the housing in the pointing device coordinate system to obtain acceleration information;
   (c) computing attitude information of the pointing device having the housing by using the acceleration information;
   (d) converting the first angular velocity, the second angular velocity, and the third angular velocity into angular velocities in a display coordinate system, respectively, by using the attitude information;
   (e) computing coordinates of a pointer to be displayed on a display device by using the converted angular velocities; and
   (f) changing a position of the pointer by using the computed coordinates of the pointer.

7. The pointer movement method of claim 6, wherein the acceleration information comprises acceleration information on the three different axes, and the attitude information comprises a roll angle and a pitch angle.

**8.** The pointer movement method of claim 7, wherein the attitude information further comprises a yaw angle.

**9.** The pointer movement method of claim 8, wherein the yaw angle is provided from a geomagnetic sensor.

**10.** The pointer movement method of claim 6, wherein the coordinates of the pointer are adjusted by a scale coefficient which adjusts a movement degree of the pointer according to the movement of the pointing device having the housing.

**11.** A pointing device having a housing comprising:

an angular velocity detection module to detect a first angular velocity, a second angular velocity, and a third angular velocity of the pointing device in a pointing device coordinate system, the pointing device turning about three different axes according to movement of the pointing device;
an acceleration detection module to detect an acceleration of the pointing device according to the movement of the pointing device in the pointing device coordinate system to obtain acceleration information;
an attitude computation module to compute attitude information of the pointing device by using the acceleration information; and
a signal conversion module to convert the first angular velocity, the second angular velocity, and the third angular velocity into angular velocities in a display coordinate system, respectively, by using the attitude information.

**12.** The pointing device of claim 11, wherein the acceleration information comprises acceleration information on the three different axes, and the attitude information comprises a roll angle and a pitch angle.

**13.** The pointing device of claim 12, wherein the attitude information further comprises a yaw angle.

**14.** The pointing device of claim 11, wherein the pointing device further comprises a geomagnetic sensor, which provides a yaw angle.

**15.** A display device comprising:

a wireless signal reception module to receive a wireless signal from a pointing device, and to extract from the wireless signal each angular velocity corresponding to a first angular velocity, a second angular velocity, and a third angular velocity of the pointing device turning about three different axes according to movement of the pointing device;
a pointer-coordinate computation module to compute coordinates of a pointer to be displayed on the display device by using the extracted angular velocity information; and
a pointer control module to move a position of the pointer displayed on the display device according to the computed coordinates.

**16.** The display device of claim 15, wherein the coordinates are adjusted by a scale coefficient which adjusts a movement degree of the pointer according to the movement of the pointing device.

**17.** A pointer movement method comprising:

(a) detecting a first angular velocity, a second angular velocity, and a third angular velocity of the pointing device having a housing in a pointing device coordinate system, the pointing device having the housing turning about three different axes according to movement of the pointing device having the housing;
(b) detecting acceleration of the pointing device according to the movement of the pointing device having the housing in the pointing device coordinate system to obtain acceleration information;
(c) computing attitude information of the pointing device having the housing by using the detected acceleration information;
(d) converting the first angular velocity, the second angular velocity, and the third angular velocity into angular velocities in a display coordinate system, respectively, by using the attitude information, and transmitting the converted angular velocities to a display device;
(e) receiving the transmitted converted angular velocities in the display device;
(f) computing coordinates of a pointer to be displayed on the display device by using the converted angular velocities; and
(g) changing a position of the pointer displayed on the display device by using the computed coordinates of the pointer.

18. The pointer movement method of claim 17, wherein the acceleration information comprises acceleration information on three different axes, and the attitude information comprises a roll angle and a pitch angle.

19. The pointer movement method of claim 18, wherein the attitude information further comprises a yaw angle.

20. The pointer movement method of claim 19, wherein the yaw angle is provided from a geomagnetic sensor.

21. The pointer movement method of claim 17, wherein the coordinates of the pointer are adjusted by a scale coefficient which adjusts a movement degree of the pointer according to the movement of the pointing device having the housing.

22. A pointer movement method comprising:

(a) receiving a wireless signal from a pointing device;
(b) extracting from the wireless signal a first angular velocity, a second angular velocity, and a third angular velocity of the pointing device turning about three different axes according to movement of the pointing device;
(c) computing coordinates of a pointer to be displayed on a display device by using the extracted angular velocity information; and
(d) moving a position of the pointer displayed on the display device according to the computed coordinates.

23. The pointer movement of claim 22, wherein the coordinates are adjusted by a scale coefficient which adjusts a movement degree of the pointer according to the movement of the pointing device.

24. The pointing device of claim 4, wherein the geomagnetic sensor provides the yaw angle.

25. At least one computer readable medium storing computer readable instructions that control at least one processor to implement the method of claim 6.

26. At least one computer readable medium storing computer readable instructions that control at least one processor to implement the method of claim 17.

27. A pointer movement method comprising:

converting a first angular velocity, a second angular velocity, and a third angular velocity of a pointing device moving in a pointing device coordinate system to angular velocities in a display coordinate system, respectively, by using a first attitude, a second attitude, and a third attitude of the pointing device;
computing coordinates of a pointer to be displayed on a display device by using the converted angular velocities; and
changing a positing of the pointer to be displayed on the display device by using the computed coordinates of the pointer.

28. The pointer movement method of claim 27, wherein the first attitude, the second attitude, and the third attitude of the pointing device are based upon first acceleration, second acceleration, and third acceleration of the pointing device, respectively.

29. The pointer method of claim 28, wherein one of the first acceleration, second acceleration, and third acceleration is zero.

30. The pointer method of claim 27, wherein one of the first angular velocity, second angular velocity, and third angular velocity is zero.

31. The pointer method of claim 27, wherein one of the first attitude, second attitude, and third attitude is zero.

32. The pointer method of claim 27, wherein the first attitude is a roll angle, the second attitude is a pitch angle, and a third attitude is a yaw attitude.

33. At least one computer readable medium storing computer readable instructions that control at least one processor to implement the method of claim 27.

**34.** A pointer movement method comprising:

converting a first angular velocity, a second angular velocity, and a third angular velocity of a pointing device moving in a pointing device coordinate system to angular velocities in a display coordinate system, respectively, by using a first attitude, a second attitude, and a third attitude of the pointing device;
transmitting converted angular velocities from the pointing device to a display device;
computing coordinates of a pointer to be displayed on a display device by using the converted angular velocities using the display device; and
changing a positing of the pointer displayed on the display device by using the computed coordinates of the pointer.

**35.** The pointer movement method of claim 34, wherein the first attitude, the second attitude, and the third attitude of the pointing device are based upon first acceleration, second acceleration, and third acceleration of the pointing device, respectively.

**36.** The pointer method of claim 35, wherein one of the first acceleration, second acceleration, and third acceleration is zero.

**37.** The pointer method of claim 34, wherein one of the first angular velocity, second angular velocity, and third angular velocity is zero.

**38.** The pointer method of claim 34, wherein one of the first attitude, second attitude, and third attitude is zero.

**39.** The pointer method of claim 34, wherein the first attitude is a roll angle, the second attitude is a pitch angle, and a third attitude is a yaw attitude

**40.** At least one computer readable medium storing computer readable instructions that control at least one processor to implement the method of claim 34.

# FIG. 1

## FIG. 2

**FIG. 3**

150

152

154

156

| WIRELESS SIGNAL RECEPTION MODULE | $(x_n, y_n)$ ⟹ | POINTER CONTROL MODULE | ⟹ | DISPLAY MODULE |
| --- | --- | --- | --- | --- |

# FIG. 4

START

↓

DETECT ANGULAR VELOCITY AND ACCELERATION OF POINTING DEVICE — S410

↓

COMPUTE ATTITUDE INFORMATION BY USING THE DETECTED ACCELERATION INFORMATION — S420

↓

CONVERT THE ANGULAR VELOCITY OF THE POINTING DEVICE INTO ANGULAR VELOCITY IN DISPLAY COORDINATE SYSTEM BY USING THE DETECTED ANGULAR VELOCITY INFORMATION AND ATTITUDE INFORMATION — S430

↓

COMPUTE COORDINATES OF POINTER IN DISPLAY COORDINATE SYSTEM — S440

↓

TRANSMIT COORDINATES OF THE POINTER — S450

↓

MOVE THE POINTER — S460

↓

END

# FIG. 5

500

510

ANGULAR VELOCITY DETECTION MODULE

$\omega_b$

516

SIGNAL CONVERSION MODULE

$\omega_n$

520

WIRELESS SIGNAL TRANSMISSION MODULE

512

ACCELERATION DETECTION MODULE

$a_b$

514

ATTITUDE COMPUTATION MODULE

$(\varphi, \theta, \psi)$

**FIG. 6**

<u>600</u>

# FIG. 7

START

DETECT ANGULAR VELOCITY AND ACCELERATION OF POINTING DEVICE — S710

COMPUTE ATTITUDE INFORMATION BY USING THE DETECTED ACCELERATION INFORMATION — S720

CONVERT THE ANGULAR VELOCITY OF THE POINTING DEVICE INTO ANGULAR VELOCITY IN DISPLAY COORDINATE SYSTEM BY USING THE DETECTED ANGULAR VELOCITY INFORMATION AND ATTITUDE INFORMATION — S730

TRANSMIT CONVERTED ANGULAR VELOCITY INFORMATION TO DISPLAY DEVICE — S740

COMPUTE COORDINATES OF POINTER IN DISPLAY COORDINATE SYSTEM BY USING RECEIVED ANGULAR VELOCITY INFORMATION — S750

MOVE THE POINTER — S760

END

**EP 1 860 528 A2**

**REFERENCES CITED IN THE DESCRIPTION**

**Patent documents cited in the description**

- KR 1020060046218
- US 5440326 A